(19) Europäisches Patentamt
European Patent Office
Office européen des brevets

(11) EP 0 871 044 B1

(12) **EUROPÄISCHE PATENTSCHRIFT**

(45) Veröffentlichungstag und Bekanntmachung des Hinweises auf die Patenterteilung:
**23.11.2005 Patentblatt 2005/47**

(51) Int Cl.$^7$: **G01T 1/29**, G01T 1/20

(21) Anmeldenummer: **98105414.1**

(22) Anmeldetag: **25.03.1998**

(54) **Verfahren zur Verbesserung der Bildschärfe in der Röntgen-Computertomographie**

Method for Improving the Image Quality in X Ray Computer Tomography

Procédé pour améliorer la qualité des images en tomographie à rayonnement X

(84) Benannte Vertragsstaaten:
**DE FR GB**

(30) Priorität: **09.04.1997 DE 19714689**

(43) Veröffentlichungstag der Anmeldung:
**14.10.1998 Patentblatt 1998/42**

(73) Patentinhaber: **SIEMENS AKTIENGESELLSCHAFT**
**80333 München (DE)**

(72) Erfinder:
- **Oppelt, Arnulf, Dr.**
**91080 Spardorf (DE)**
- **Stierstorfer, Karl, Dr.**
**91052 Erlangen (DE)**

(56) Entgegenhaltungen:
**DE-A- 19 524 858**
**DE-C- 4 420 603**
**GB-A- 2 289 981**
**US-A- 5 587 591**
- **PATENT ABSTRACTS OF JAPAN vol. 018, no. 384 (P-1772), 19. Juli 1994 (1994-07-19) & JP 06 109855 A (SHIMADZU CORP), 22. April 1994 (1994-04-22)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 871 044 B1

## Beschreibung

Es ist bekannt, in der Röntgentechnik Röntgendetektoren einzusetzen, bei denen ein Szintillator die Röntgenstrahlung in sichtbares Licht umwandelt, wobei dieses Licht dann durch einen lichtelektrischen Wandler in ein elektrisches Signal gewandelt wird. Daraus kann dann z.B. ein Bild des untersuchten Objektes erzeugt werden. Die Ortsauflösung ist dabei im allgemeinen reduziert, da die optische Ausbreitung des Lichtes im Szintillator zu Unschärfen führt. So entsteht beispielsweise bei der Abbildung eines Punktes auf dem Szintillator auf dessen Unterseite eine Verwischung der Ränder dieses Punktes.

In der digitalen Radiographie ist es bekannt, einem Szintillationskristall als Röntgenstrahlenwandler mehrere lichtelektrische Wandler zur Erzeugung entsprechender elektrischer Bildsignale zuzuordnen. Dadurch wird eine gewünschte Bildauflösung erzielt (US 5 587 591; Nuclear Instruments and Methods in Physics Research, A 310, 1991, Seiten 471 bis 474; DE 195 24 858 A1; DE 44 20 603 C1). Die bekannten Röntgenstrahlenwandler sind jedoch in der Computertomographie nicht anwendbar.

Aus der JP-A-6 109 855 ist darüber hinaus ein Detektor für einen Röntgen-Computertomographen zur effizienten Erfassung von Röntgenstrahlung bekannt, bei dem jedem Szintillator zumindest zwei Photodioden zugeordnet sind.

Der Erfindung liegt die Aufgabe zugrunde, einen Computertomographen hinsichtlich des darin vorgesehenen Röntgendetektors so auszubilden, daß die Bildschärfe gegenüber dem Stand der Technik verbessert ist.

Diese Aufgabe wird durch ein Verfahren zur Bilderzeugung in der Computertomographie gemäß den Merkmalen des unabhängigen Anspruchs 1 gelöst. Vorteilhafte Ausgestaltungen des Verfahrens gemäß den Merkmalen des unabhängigen Anspruchs 1 sind jeweils Gegenstand der Unteransprüche 2 und 3.

Nach der Erfindung wird ein Röntgen-Computertomograph mit einer Röntgenstrahlenquelle bereitgestellt, die ein fächerförmiges Röntgenstrahlenbündel aussendet, das auf einem Detektor auftrifft, welcher aus einer Reihe von Einzeldetektoren besteht, wobei jeder Einzeldetektor einen Röntgenstrahlenwandler aufweist, der von mindestens einem Szintillator gebildet ist und der in optischem Kontakt mit mehreren Signalwandlern in Form von Photosensoren steht. Für jeden Signalwandler wird ein Signal $S_i$ aus den von mehreren der Signalwandler gemessenen Meßsignalen $M_j$ gemäß

$$S_i = \sum_j (A^{-1})_{ij} \cdot M_j$$

berechnet, wobei $(A^{-1})_{ij}$ die Invertierte einer Kopplungsmatrix ist, welche die Unschärfe des Detektors infolge einer Kopplung zwischen den Signalwandlern beschreibt. Aus den Meßsignalen der Signalwandler kann ein scharfes Meßsignal rekonstruiert werden.

Die Erfindung ist nachfolgend anhand der Zeichnungen näher erläutert. Es zeigen:

Fig. 1 die wesentlichen Teile eines Röntgen-Computertomographen mit einem Röntgendetektor zur Erläuterung der Erfindung, und

Fig. 2 bis 4 Varianten des Röntgendetektors des Computertomographen gemäß Fig. 1.

Der in der Fig. 1 dargestellte Computertomograph weist eine Meßeinheit aus einer Röntgenstrahlenquelle 1, die ein fächerförmiges Röntgenstrahlenbündel 2 aussendet, und einem Detektor 3 auf, welcher aus einer Reihe von Einzeldetektoren, z.B. aus 512 Einzeldetektoren, besteht. Der Fokus ist mit 11 bezeichnet. Der zu untersuchende Patient 4 liegt auf einer Patientenliege 5. Zur Abtastung des Patienten 4 wird die Meßeinheit 1, 3 um ein Meßfeld 9, in dem der Patient 4 liegt, um 360° gedreht. Die Drehachse ist mit 10 bezeichnet. Dabei wird die Röntgenstrahlenquelle 1, die von einem Röntgengenerator 6 gespeist wird, gepulst oder mit Dauerstrahlung betrieben. Bei vorbestimmten Winkelpositionen der Meßeinheit 1, 3 werden Sätze von Daten erzeugt, die vom Detektor 3 einem Rechner 7 zugeführt werden, welcher aus den erzeugten Datensätzen die Schwächungskoeffizienten vorbestimmter Bildpunkte berechnet und auf einem Sichtgerät 8 bildlich wiedergibt. Auf dem Sichtgerät 8 erscheint demgemäß ein Bild der durchstrahlten Schicht des Patienten.

Die Fig. 2 zeigt, daß der Detektor 3 aus einer Reihe von Szintillatoren 12 besteht, mit denen eine Photodiodenschicht 13 in optischem Kontakt steht. Die Photodiodenschicht 13 ist in der Fig. 2 rechts herausgezeichnet. Daraus geht hervor, daß in Strahlenrichtung gesehen hinter jedem Szintillator 12 eine Reihe von Photodioden liegt. In z-Richtung, d.h. in Richtung der Drehachse 10, ist also bei dem Ausführungsbeispiel gemäß Fig. 2 der Detektor 3 unstrukturiert. Er ist jedoch in $\phi$-Richtung strukturiert.

Bei dem Ausführungsbeispiel gemäß Fig. 3 ist der Detektor 3 aus einer Matrix von Szintillatoren 14 aufgebaut. Hinter jedem Szintillator 14 liegt im optischen Kontakt eine Matrix aus Photodioden 15.

Bei dem Ausführungsbeispiel gemäß Fig. 4 entspricht die Strukturierung des Detektors 3 hinsichtlich der Szintillatoren 12 der Strukturierung gemäß Fig. 2. Hinter jedem Szintillator 12 liegt eine Matrix von Photodioden 16.

Wesentlich für die Fig. 2 bis 4 ist, daß ein nicht weiter strukturierter Szintillator optisch an ein Array von Photodioden angekoppelt ist.

Durch die Unschärfe des Szintillators wird für

den Szintillator anstelle des scharfen (theoretisch mit einem nicht verunschärfenden Szintillator gemessenen) Signal das Signal M gemessen:

$$M_i = \sum_j A_{ij} S_j$$

Die Kopplungsmatrix $A_{ij}$ enthält die Unschärfe des Systems. Ist sie bekannt und invertierbar, so kann S aus dem Meßsignal M rekonstruiert werden:

$$S_i = \sum_j \left(A^{-1}\right)_{ij} M_j .$$

Die Kopplungsmatrix A erhält man durch folgendes Verfahren:

Bestrahlt man das System so, daß jeweils nur ein (etwa das k-te) Rastersegment beleuchtet wird ($S_j = \bar{S}$ für j = k, 0 sonst), so erhält man $M_i = A_{ik}$; das gemessene Signal ist also gerade die k -te Spalte der Matrix A. Wiederholt man die ses Verfahren für alle k, erhält man also die gesamte Kopplungsmatrix. Die Voraussetzung, daß A invertierbar ist, ist z.B. dann erfüllt, wenn in jeder Spalte das Diagonalelement das größte ist. Dies ist der Fall, wenn der Szintillator nicht zu unscharf ist, also die Breite der Punktbildfunktion in der Größenordnung des Rasters liegt.

## Patentansprüche

1. Verfahren zur Bilderzeugung in der Computertomographie, mit folgenden Schritten:

   a) Bereitstellen eines Röntgen-Computertomographen mit einer Röntgenstrahlenquelle (1), die ein fächerförmiges Röntgenstrahlenbündel (2) aussendet, das auf einem Detektor (3) auftrifft, welcher aus einer Reihe von Einzeldetektoren besteht, wobei jeder Einzeldetektor einen Röntgenstrahlenwandler aufweist, der von mindestens einem Szintillator (12, 14) gebildet ist und der in optischem Kontakt mit mehreren Signalwandlern in Form von Photosensoren (13, 15, 16) steht,

   b) für jeden Signalwandler (i) Berechnen eines Signals $S_i$ aus den von mehreren der Signalwandler (j) gemessenen Meßsignalen $M_j$ gemäß

   $$S_i = \sum_j (A^{-1})_{ij} \cdot M_j \quad ,$$

   wobei $(A^{-1})_{ij}$ die Invertierte einer Kopplungsmatrix ($A_{ij}$) ist, welche die Unschärfe des Detektors (3) infolge einer Kopplung zwischen den Signalwandlern (i, j) beschreibt.

2. Verfahren nach Anspruch 1, bei dem jedem Szintillator (12) eine Reihe von Photosensoren (13) zugeordnet ist.

3. Verfahren nach Anspruch 1, bei dem jedem Szintillator (12, 14) eine Matrix von Photosensoren (15, 16) zugeordnet ist.

## Claims

1. Method for image generation in computed tomography with the following steps;

   a) Provision of an x-ray computed tomography device with an x-ray radiation source (1), which transmits a fan-shaped x-ray radiation bundle (2) which strikes a detector (3) made from a row of individual detectors, each individual detector comprising an x-ray radiation converter, which is formed from at least one scintillator (12, 14) and is in optical contact with several signal converters in the form of photosensors (13, 15, 16),

   b) for each signal converter (i) calculate a signal $S_i$ from measurement signals $M_j$ measured from several of the signal converters (j) according to

   $$S_i = \sum_j (A^{-1})_{ij} \cdot M_j \ ,$$

   in which $(A^{-1})_{ij}$ is the inversion of a coupling matrix ($A_{ij}$), which describes the unsharpness of the detector (3) as a result of a coupling between the signal converters (i,j).

2. Method according to claim 1, in which each scintillator (12) is assigned a row of photosensors (13).

3. Method according to claim 1, in which each scintillator (12, 14) is assigned a matrix of photosensors (15, 16)

## Revendications

1. Procédé de production d'images dans la tomographie par ordinateur, comportant les étapes suivantes :

   a) mise à disposition d'un tomographe à rayons x par ordinateur comportant une source (1) de

rayons x, qui émet un faisceau (2) de rayons x en forme d'éventail incident sur un détecteur (3), qui est constitué d'une rangée de détecteurs individuels, chaque détecteur individuel ayant un convertisseur de rayons x, qui est formé d'au moins un scintillateur (12, 14) et qui est en contact optique avec plusieurs convertisseurs de signal sous la forme de photocapteurs (13, 15, 16),

b) pour chaque convertisseur (i) de signal, on calcul un signal $S_i$ à partir des signaux $M_J$ de mesure, mesurés par plusieurs des convertisseurs (j) de signal, suivant la formule

$$S_i = \sum_j (A^{-1})_{ij} \cdot M_j \ ,$$

dans lequel $(A^{-1})_{ij}$ est l'inverse d'une matrice ($A_{ij}$) de couplage, qui décrit l'imprécision du détecteur (3) due à un couplage entre les convertisseurs (i, j) de signal.

**2.** Procédé suivant la revendication 1, dans lequel à chaque scintillateur (12) est associé une rangée de photocapteurs (13).

**3.** Procédé suivant la revendication 1, dans lequel, à chaque scintillateur (12, 14) une matrice de photocapteurs (15,16) est associée.

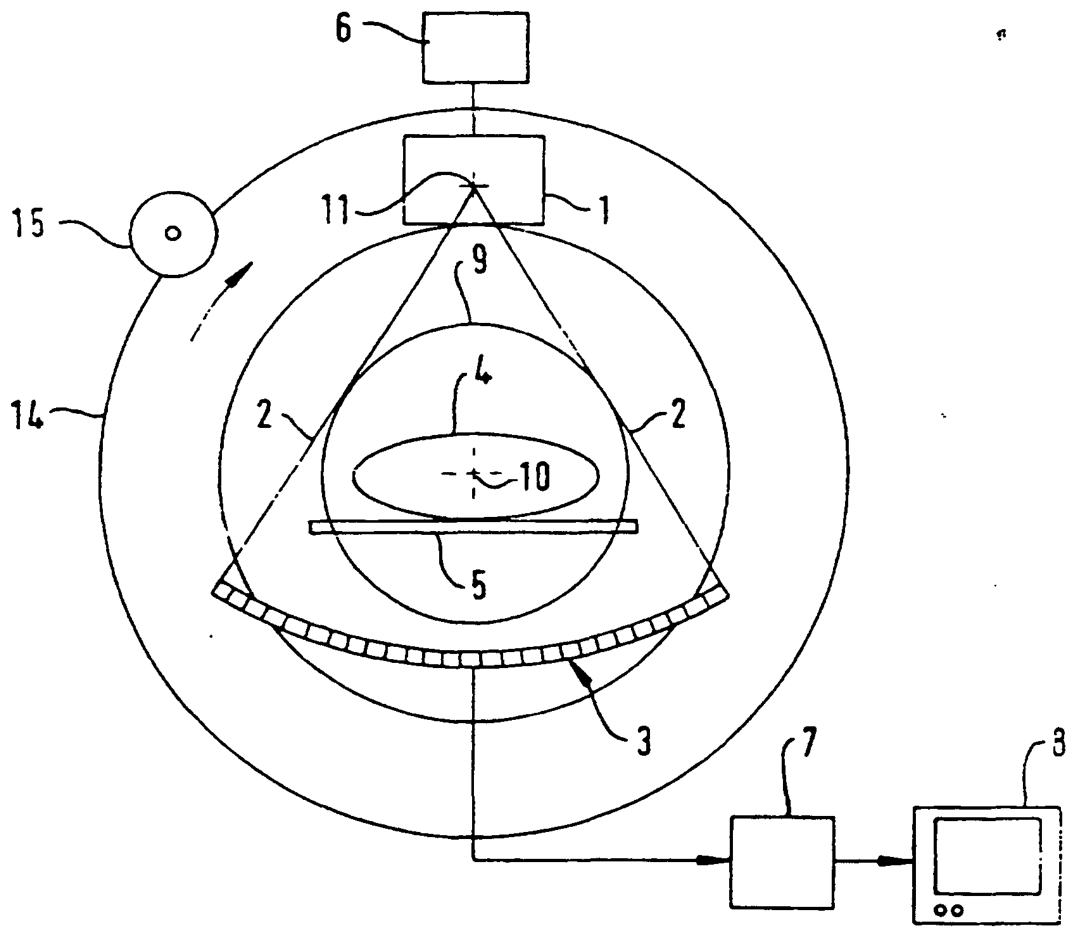


FIG 1

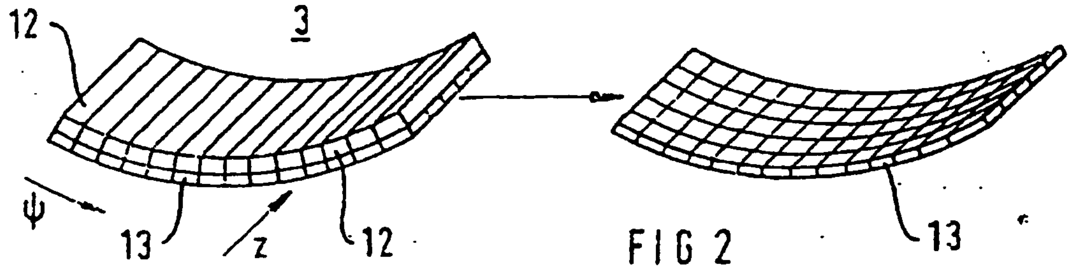


FIG 2

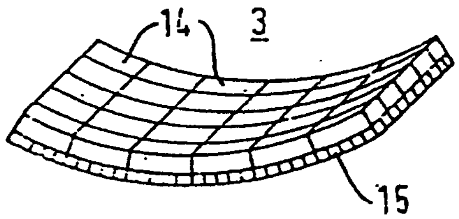


FIG 3

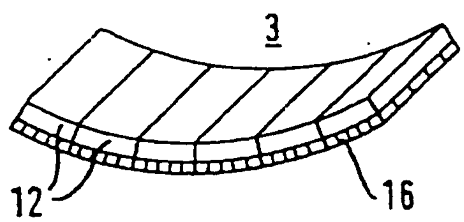


FIG 4